(19) Europäisches Patentamt
European Patent Office
Office européen des brevets

(11) EP 3 032 360 A1

(12) DEMANDE DE BREVET EUROPEEN

(43) Date de publication:
15.06.2016 Bulletin 2016/24

(51) Int Cl.:
G04G 21/00 (2010.01)  G04B 19/28 (2006.01)
G04C 3/00 (2006.01)  G06F 3/0338 (2013.01)
G06F 3/0362 (2013.01)

(21) Numéro de dépôt: 14197659.7

(22) Date de dépôt: 12.12.2014

(84) Etats contractants désignés:
AL AT BE BG CH CY CZ DE DK EE ES FI FR GB
GR HR HU IE IS IT LI LT LU LV MC MK MT NL NO
PL PT RO RS SE SI SK SM TR
Etats d'extension désignés:
BA ME

(71) Demandeur: The Swatch Group Research and
Development Ltd.
2074 Marin (CH)

(72) Inventeurs:
• Vuille, Pierry
2207 Coffrane (CH)
• Nicolas, Cédric
2000 Neuchâtel (CH)
• Hoover, David
1315 La Sarraz (CH)

(74) Mandataire: Tournel, Maxime Jean-Joseph et al
ICB Ingenieurs Conseils en Brevets
Fbg de l'Hopital 3
2001 Neuchatel (CH)

(54) PIÈCE D'HORLOGERIE AVEC LUNETTE MANIPULABLE

(57) L'invention concerne une pièce d'horlogerie comprenant une carrure (2a) fermée par un fond et une glace dans laquelle un système électronique (4) est agencé, ladite carrure (2a) comportant un épaulement périphérique (20) comprenant une base et une paroi latérale parallèle à l'axe central (C) de la carrure, ladite pièce d'horlogerie comprenant une lunette (81) verrouillée en rotation autour de l'axe central (C) sur ledit épaulement périphérique, caractérisé en ce que ledit anneau présente au moins un degré de liberté permettant au système électronique (4) de commander ladite pièce d'horlogerie.

Fig. 4b

## Description

La présente invention concerne une pièce d'horlogerie comprenant une carrure fermée par un fond et une glace, ladite pièce d'horlogerie comprenant en outre un système de lunette fixé à ladite carrure.

Le domaine technique de l'invention est le domaine technique de la mécanique fine.

ARRIERE PLAN TECHNOLOGIQUE

Il est connu des objets portables tels que des montres électroniques. Ces montres électroniques comprennent un boîtier composé d'une carrure fermée par un fond et une glace ; sous la glace, des moyens d'affichage sont agencés.

Cette montre comprend en outre un module électronique capable d'opérer diverses fonctions comme par exemple une fonction alarme ou chronographe ou compte à rebours.

Pour faire fonctionner une telle montre, celle-ci est équipée de moyens de commande. Ces moyens de commande peuvent comprendre une couronne et/ou des poussoirs situés au niveau de la carrure. Dans une montre classique, celle-ci est généralement équipée d'une couronne située à 3H et de deux poussoirs situés respectivement à 2H et 4H. Un poussoir peut aussi être substitué à la couronne.

Pour des montres plus compliquées, deux autres poussoirs situés à 8H et 10H peuvent être ajoutés.

La mise en oeuvre des différentes fonctions est donc très souvent limitée à des manipulations successives de ces moyens de commande, avec des séquences prédéfinies et/ou des temps d'appui plus ou moins longs.

Pour résoudre ce problème, une solution consiste à utiliser des moyens tactiles. Ces moyens tactiles comprennent des touches tactiles agencées par exemple au niveau de la glace ou de la carrure.

Toutefois, l'ajout de moyens tactiles augmente les coûts et peut rendre plus complexes les manipulations des diverses fonctions. De plus, l'utilisation des touches tactiles sur la glace peut réduire la visibilité de la zone d'affichage pendant que l'utilisateur agit sur les différentes fonctions.

RESUME DE L'INVENTION

L'invention a pour but de pallier les inconvénients de l'art antérieur en proposant de fournir un objet portable ayant des moyens de commande supplémentaires permettant de nouvelles manipulations sans surcharger le nombre de poussoirs ou le nombre de touches tactiles.

A cet effet, la présente invention consiste en un objet portable tel une Pièce d'horlogerie comprenant une carrure fermée par un fond et une glace dans laquelle un système électronique est agencé, ladite carrure comportant un épaulement périphérique comprenant une base et une paroi latérale parallèle à l'axe central de la carrure, ladite pièce d'horlogerie comprenant une lunette verrouillée en rotation autour de l'axe central sur ledit épaulement périphérique, caractérisé en ce que ladite lunette présente au moins un degré de liberté permettant à des moyens d'interface connectés au système électronique et agencés entre la lunette et la carrure d'être activés par déplacement de ladite lunette par l'utilisateur suivant une direction similaire à celle du degré de liberté permettant au système électronique de commander ladite pièce d'horlogerie.

Dans un premier mode de réalisation avantageux, le degré de liberté permet un mouvement de pivotement de la lunette par rapport à un de ces diamètres.

Dans un second mode de réalisation avantageux, le degré de liberté permet un mouvement de translation de la lunette dans son plan.

Dans un troisième mode de réalisation avantageux, les moyens d'interface sont agencés sur la base de l'épaulement.

Dans un quatrième mode de réalisation avantageux, les moyens d'interface sont agencés sur la paroi latérale de l'épaulement.

Dans un cinquième mode de réalisation avantageux, les moyens d'interface comprennent au moins un capteur capacitif ou au moins un capteur inductif ou au moins un capteur optique ou au moins un capteur galvanique ou au moins une jauge de contrainte ou au moins un capteur magnétique ou au moins un capteur potentiométrique ou une combinaison d'au moins deux de ces capteurs ou jauges.

Dans un sixième mode de réalisation avantageux, au moins un capteur capacitif comprend une armature sur une face de l'épaulement et une armature sur une face inférieure de la lunette, ladite base de l'épaulement et ladite lunette étant au moins partiellement réalisées en matériaux non conducteurs.

L'invention concerne également une pièce d'horlogerie comprenant une carrure fermée par un fond et une glace dans laquelle un système électronique est agencé, ladite carrure comportant un épaulement périphérique comprenant une base et une paroi latérale parallèle à l'axe central de la carrure, ladite pièce d'horlogerie comprenant un système de lunette montée mobile en rotation autour de l'axe central sur ledit épaulement périphérique, ledit système de lunette tournante comprenant une lunette et un ensemble d'indexation comprenant un moyen ressort comme première pièce et un élément denté comme seconde pièce, l'une des premières ou secondes pièces étant fixée à la lunette, l'autre étant fixée à la carrure,
caractérisée en ce que ledit anneau présente au moins un degré de liberté permettant à des moyens d'interface connectés au système électronique et agencés entre ladite lunette et la carrure d'être activés déplacement de ladite lunette par l'utilisateur suivant une direction similaire à celle du degré de liberté permettant au système électronique de commander ladite pièce d'horlogerie.

Dans un premier mode de réalisation avantageux, le degré de liberté permet un mouvement de pivotement de la lunette par rapport à un de ces diamètres.

Dans un second mode de réalisation avantageux, le degré de liberté permet un mouvement de translation de la lunette dans son plan

Dans un troisième mode de réalisation avantageux, les moyens d'interface sont agencés sur la base de l'épaulement.

Dans un quatrième mode de réalisation avantageux, les moyens d'interface sont agencés sur la paroi latérale de l'épaulement.

Dans un cinquième mode de réalisation avantageux, les moyens d'interface comprennent au moins un capteur capacitif ou au moins un capteur inductif ou au moins un capteur optique ou au moins un capteur galvanique ou au moins une jauge de contrainte ou au moins un capteur magnétique ou au moins un capteur potentiométrique ou une combinaison d'au moins deux de ces capteurs ou jauges.

Dans un sixième mode de réalisation avantageux, au moins un capteur capacitif comprend une armature sur une face de l'épaulement et une armature sur une face inférieure de la lunette, ladite base de l'épaulement et ladite lunette étant au moins partiellement réalisées en matériaux non conducteurs.

Dans un autre mode de réalisation avantageux, la pièce d'horlogerie comprend en outre des moyens de détection de la rotation comprenant une série de contacts récepteurs placés au niveau de la carrure et au moins un contact curseur placé au niveau de la lunette, ladite série de contacts récepteurs et ledit au moins un contact curseur étant des plages conductrices électriquement.

Dans un autre mode de réalisation avantageux, la pièce d'horlogerie comprend en outre des moyens de détection de la rotation comprenant une série de contacts récepteurs placés au niveau de la carrure et au moins un contact curseur placé au niveau de la lunette, ladite série de contacts récepteurs et ledit au moins un contact curseur étant des éléments magnétiques.

Dans un autre mode de réalisation avantageux, la pièce d'horlogerie en outre des moyens de détection de la rotation comprenant une série de contacts récepteurs placés au niveau de la carrure et au moins un contact curseur placé au niveau de la lunette, ladite série de contacts récepteurs et ledit au moins un contact curseur sont les armatures utilisées par ledit au moins capteur capacitif.

Dans un autre mode de réalisation avantageux, la pièce d'horlogerie comprend en outre des moyens de détection de la rotation comprenant une série de contacts récepteurs placés au niveau de la lunette et au moins un contact curseur placé au niveau de la carrure, ladite série de contacts récepteurs et ledit au moins un contact curseur sont les armatures utilisées par ledit au moins capteur capacitif.

Dans un autre mode de réalisation avantageux, ledit système de lunette tournante comprenant un système à retour de force (400) un élément élastique permettant à l'anneau de reprendre sa position initiale suite à un relâchement d'une force de rotation appliquée sur ledit anneau

BREVE DESCRIPTION DES FIGURES

Les buts, avantages et caractéristiques de la présente invention apparaîtront plus clairement dans la description détaillée suivante d'au moins une forme de réalisation de l'invention donnée uniquement à titre d'exemple non limitatif et illustrée par les dessins annexés sur lesquels :

- Les figures 1a et 1b représentent schématiquement la pièce d'horlogerie selon l'invention;

- Les figures 2a, 2b, 3a et 3b représentent schématiquement un premier mode d'exécution d'un premier mode de réalisation de l'invention;

- Les figures 4a, 4b, 5a, 5b, 6a, 6b représentent schématiquement un second mode d'exécution d'un premier mode de réalisation de l'invention;

- Les figures 7 à 11 représentent schématiquement un mode d'exécution d'un second mode de réalisation de l'invention;

- Les figures 12 et 13 représentent schématiquement une variante du second mode de réalisation de l'invention.

DESCRIPTION DETAILLEE

La présente invention procède de l'idée générale inventive qui consiste à procurer un objet portable doté de moyens de commande supplémentaires aux poussoirs et couronne habituels sans trop surcharger ni complexifier ledit objet portable. L'objet portable en question sera une pièce d'horlogerie comme une montre bracelet ou une montre de poche ou un objet portable sur bracelet comme un podomètre ou un GPS.

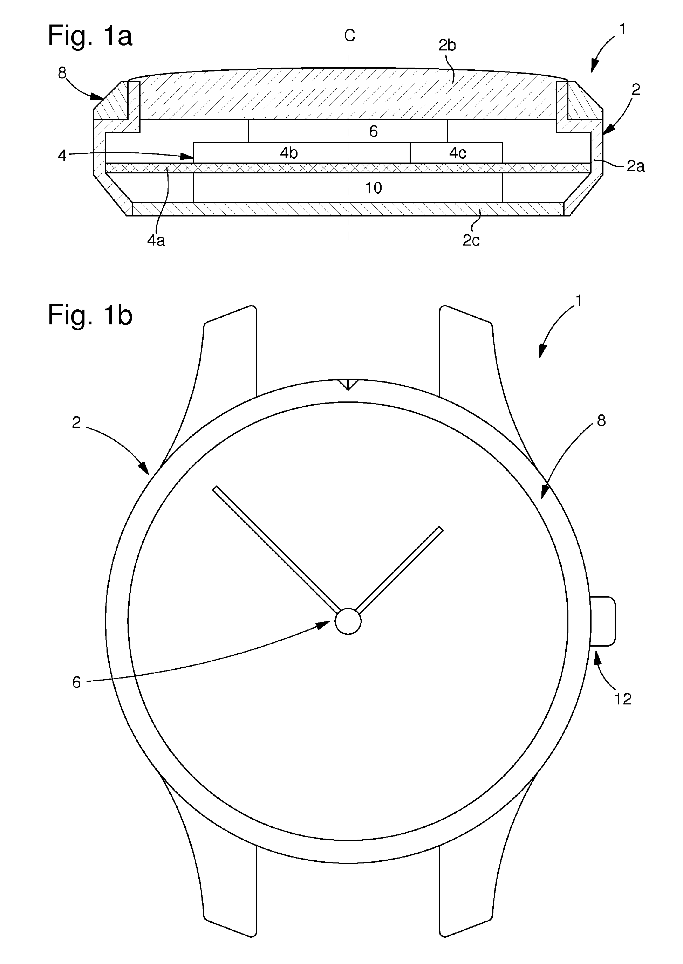

Aux figures 1a et 1b, un objet portable 1 selon la présente invention est représenté. L'objet portable 1, ici une montre, comprend un boîtier 2 constitué d'une carrure 2a fermée par une glace 2b et un fond 2c. Dans ce boîtier 2, un système électronique 4 est placé. Ce système électronique 4, monté sur une platine 4a, comprend un microcontrôleur 4b apte à opérer diverses fonctions. Le microcontrôleur 4b peut, à cet effet, utiliser un ou des capteurs 4c reliés électriquement audit microcontrôleur. Le système électronique 4 commande des moyens d'affichage 6 situés sous la glace et est alimenté par une source d'énergie qui peut être par exemple une pile 10 ou une batterie rechargeable. La carrure peut en outre comprendre un système de lunette 8. Des moyens de commande classiques 12 peuvent être agencés pour piloter le système électronique 4.

Dans un premier mode de réalisation, le système de lunette 8 est un système de lunette fixe 80. Un tel système de lunette 80 est fixé au boitier 2 de l'objet portable 1 au niveau de sa carrure 2a. Cette carrure 2a comprend un épaulement périphérique 20 défini par une paroi latérale 21 et une base 22, dans lequel le système de lunette fixe 80 est placé. Le système de lunette fixe 80 comprend une lunette 81 se présentant sous la forme d'une pièce annulaire. La lunette annulaire 81 possédant une face supérieure 82, une face inférieure 83, une tranche intérieure 84 et une tranche extérieure 85, la face supérieure 82 étant la face visible par l'utilisateur. Cette lunette 81 est généralement chassée sur la carrure 2a. Cette insertion à force est possible en dotant la lunette 81 et l'épaulement 20 d'un couple gorge 23 - partie saillante 86. La lunette est maintenue de façon angulaire par des couples gorges/ergots coopérant ensemble (non représenté).

Avantageusement selon l'invention, des moyens d'interface 9 sont agencés entre la carrure 2a et le système de lunette fixe 80 et, plus particulièrement, la lunette 81. Ces moyens d'interface 9, connectés au microcontrôleur 4b, permettent l'utilisation d'au moins un degré de liberté de mouvement de la lunette 81 par rapport à la carrure, pour opérer des manipulations de l'objet portable 1. L'utilisateur se servirait donc de cette lunette pour commander l'objet portable. En effet, la lunette 81 est montée sur la carrure 2a de sorte qu'un jeu, même faible, égal au maximum à un dixième de millimètre, soit présent. Ce jeu est invisible à l'oeil nu pour l'utilisateur mais il est suffisant pour les besoins de l'invention. Cette lunette peut également permettre, lorsque l'objet portable est muni d'un système électronique 4 pourvu d'un module de communication sans fil, de commander un objet extérieur tel un drone ou un appareil de télévision ou un ordinateur tablette.

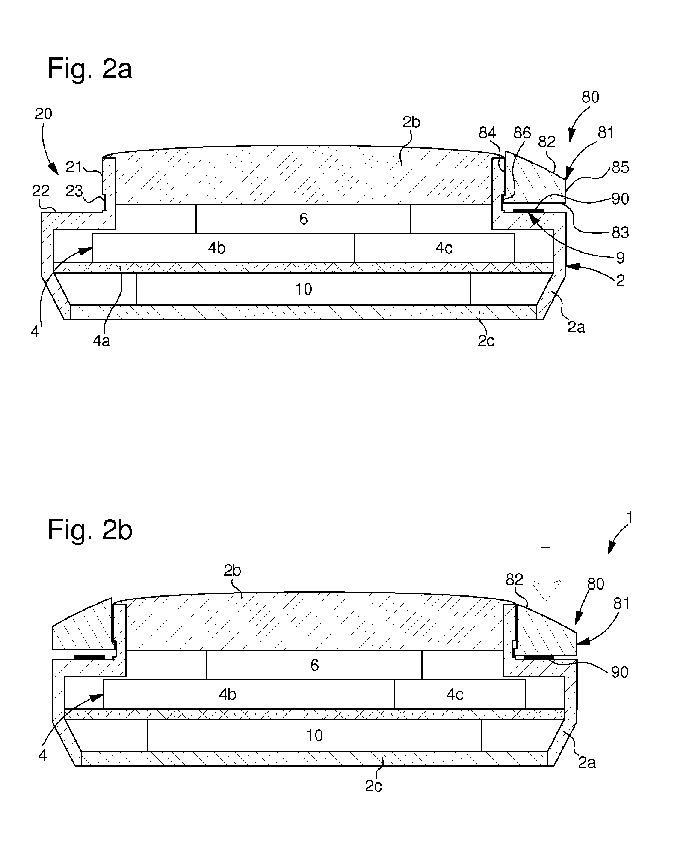

Dans un premier mode d'exécution visible à la figure 2a, le degré de liberté de la lunette 81 permet la détection d'un appui sur ladite lunette. Cette détection d'un appui est possible car la lunette 81, suite à un appui, bascule c'est-à-dire se déplace en pivotement ou en basculement, par rapport à un des diamètres de ladite lunette. A ce titre, les moyens d'interface 9 sont situés au niveau de l'épaulement 20 de la carrure 2a.

Selon une première solution, les moyens d'interface 9 comprennent au moins une jauge de contrainte 90, de préférence une pluralité de jauges de contrainte 90. Ces jauges de contrainte 90 sont électriquement reliées à une unité de détection du microcontrôleur 4b. Ces jauges de contrainte 90 sont agencées et équitablement réparties sur la base 22 de l'épaulement 20 de sorte que la lunette 81, lorsqu'elle est montée sur le boîtier 2, soit en regard de ces jauges de contrainte 90. Le nombre de jauges de contraintes 90 dépend de l'application qui en sera faite.

Pour une détection sur l'ensemble de la lunette, au moins trois jauges de contraintes 90 sont utilisées.

Ces trois jauges de contraintes 90 sont angulairement réparties de sorte qu'un appui sur la lunette par l'utilisateur entraine l'apparition d'une contrainte plus ou moins forte sur au moins deux jauges suivant l'intensité des contraintes détectées.

Selon une configuration basique, il est prévu d'avoir quatre jauges de contrainte 90, une sur chaque point cardinal. On comprend alors que les quatre jauges de contrainte 90 sont respectivement placées au niveau des marquages 12h, 3h, 6h et 9h du tour d'horloge.

Selon une configuration plus complète, il est prévu d'avoir un nombre de jauges de contrainte 90 supérieur à quatre et, de préférence, multiple de quatre, c'est-à-dire d'avoir au minimum huit jauges de contrainte 90. Ces jauges de contrainte 90 sont alors réparties angulairement sur la base 22 de l'épaulement 20. Ainsi, avec huit jauges de contrainte 90, celles-ci sont disposées tous les 45°. Un nombre plus important de jauges de contrainte 90 permet une meilleure détection de l'appui mais peut entraîner une confusion dans l'appui : l'utilisateur qui voulait appuyer sur une zone précise se retrouve à appuyer sur une autre zone.

Ces jauges de contrainte 90 se présentent par exemple sous la forme d'un capteur piézoélectrique. Un tel capteur piézoélectrique consiste en un matériau encapsulé, ledit matériau étant apte à générer une tension électrique sous l'effet d'une pression qui lui est appliquée.

Par conséquent, lorsque l'utilisateur appui sur la lunette 81 comme visible à la figure 2b, de préférence au niveau de la zone en dessous de laquelle une jauge de contrainte 90 est agencée, une pression est exercée sur la jauge de contrainte 90. Cette pression entraine l'apparition d'une tension en sortie de la jauge de contrainte 90. Cette tension est détectée par l'unité de détection du microcontrôleur 4b qui va en déduire qu'un appui est effectué et agir en conséquence pour commander la pièce d'horlogerie.

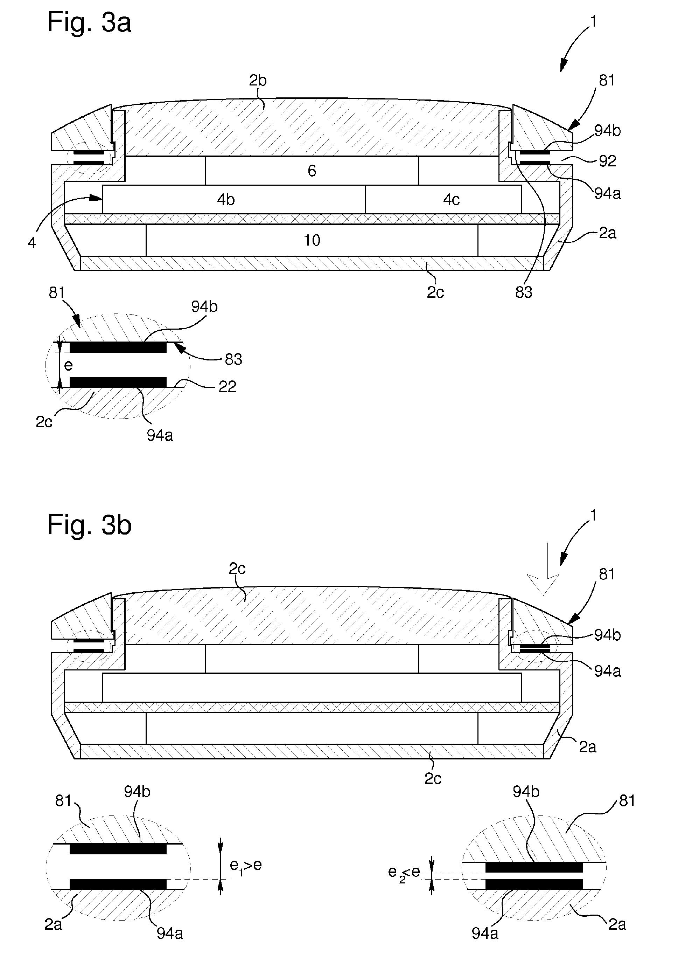

Selon une seconde solution, les moyens d'interface comprennent une pluralité de capteurs capacitifs 92 comme visible à la figure 3a. Ces capteurs capacitifs 92 comprennent chacun deux armatures conductrices 94 séparées par un isolant. Cet isolant peut être de l'air ou un élément intercalé. Ces capteurs capacitifs 92 sont électriquement reliés à une unité de détection du microcontrôleur 4b via l'une des deux armatures 94. Ces capteurs capacitifs 92 sont agencés de sorte qu'une armature 94a soit placée sur la base 22 de l'épaulement 20 et que l'autre armature 94b soit placée sur la face inférieure 83 de la lunette 81. Il est donc nécessaire que la carrure 2a et la lunette 81 soient au moins partiellement réalisées en matériaux non conducteur comme le plastique pour que cette technologie capacitive fonctionne. L'agencement des armatures 94 permet d'avoir les armatures en regard l'une de l'autre lorsque la lunette 81 est montée sur le boîtier 2.

Ces capteurs capacitifs 92 sont répartis, de préférence équitablement, sur la base 22 de l'épaulement 20. Le nombre de capteurs capacitifs 92 dépend de l'application qui en sera faite.

Selon une configuration basique, il est prévu d'avoir quatre capteurs capacitifs 92, un sur chaque point cardinal. On comprend alors que les quatre capteurs capacitifs 92 sont respectivement placés au niveau des marquages 12h, 3h, 6h et 9h du tour d'horloge ou tour d'heure.

Selon une configuration plus complète, il est prévu d'avoir un nombre de capteurs capacitifs 92 supérieur à quatre et, de préférence, multiple de quatre, c'est-à-dire d'avoir au minimum huit capteurs capacitifs 92. Ces capteurs capacitifs 92 sont alors répartis angulairement sur la base 22 de l'épaulement 20. Ainsi, avec huit capteurs capacitifs 92, ceux-ci sont disposés tous les 45°. Un nombre plus important de capteurs capacitifs 92 permet une meilleure détection de l'appui mais peut entrainer une confusion dans l'appui : l'utilisateur qui voulait appuyer sur une zone précise se retrouve à appuyer sur une autre zone.

Le fonctionnement de ces capteurs capacitifs 92 utilise leur principe physique. En effet, la capacité C d'un condensateur est égale à :

$$C = \varepsilon \frac{S}{e}$$

Avec S : surface des armatures en regard, e distance entre les armatures et $\varepsilon$ la permittivité du diélectrique.

La grandeur utilisée ici pour la détection de l'appui est la distance e entre les armatures 94 (voir zoom de la figure 3a). En effet, on sait que si la distance e varie alors la capacité varie de sorte que, si la distance e augmente, la capacité diminue et inversement.

Par conséquent, lorsque l'utilisateur appuie sur la lunette 81 comme visible à la figure 3b, de préférence au niveau de la zone en dessous de laquelle un capteur capacitif 92 est agencé, la pression exercée entraîne un déplacement de l'armature 94b située sur la lunette 81 par rapport à l'armature 94a située en regard sur la carrure. Ce déplacement consiste à un rapprochement des deux armatures 94 entraînant une modification de la distance e1 plus faible que la distance e initiale et augmentant la valeur de la capacité mesurée.

L'unité de détection du microcontrôleur 4b qui est chargée de la détection des valeurs de capacités des capteurs capacitifs 94 détecte cette augmentation de la capacité. L'unité de détection en va en déduire qu'un appui est effectué et le microcontrôleur 4b agira en conséquence selon sa programmation. Selon les configurations carrure lunette, il est possible de remplacer les capteurs capacitifs 92 par des dispositifs inductifs, galvaniques ou optiques.

Pour un dispositif inductif, il s'agit, par exemple, d'un capteur constitué d'un aimant permanent mis à l'intérieur d'une bobine. Lorsqu'un objet métallique est mis à proximité du capteur, la réluctance magnétique du circuit varie, et permet la création d'un courant dans la bobine, le courant étant plus ou moins fort selon la distance de l'objet métallique qui peut être ici une armature métallique.

Pour un dispositif optique, il s'agit, par exemple, d'un capteur constitué d'un élément émetteur de lumière et d'un élément récepteur. Le dispositif optique peut être configuré de sorte que le faisceau lumineux réfléchisse contre une paroi de la lunette avant d'être reçu par l'élément récepteur. Le temps entre l'émission et la réception varie selon la distance entre la lunette et la carrure.

Dans une variante, outre la détection d'un appui c'est-à-dire du déplacement de l'armature 94b situé sur la lunette par rapport à l'armature 94a située en regard sur la carrure, une détection d'un déplacement inverse est effectuée.

Cette variante prend en compte le fait que lors d'un appui sur une zone de la lunette, la zone opposée subit un déplacement inverse par effet de levier. Voir figure 3b. Par conséquent, si un appui provoque, au niveau de ladite zone d'appui, un déplacement de l'armature située sur la lunette 81 par rapport à l'armature située sur la carrure 2a augmentant la capacité, il provoque également, au niveau de la zone opposée à la zone d'appui, un déplacement de l'armature située sur la lunette 81 par rapport à l'armature située sur la carrure 2a. Ce déplacement consiste en ce que les deux armatures s'éloignent l'une de l'autre et par conséquent, une diminution de la capacité.

L'unité de détection détecte alors, en parallèle, l'augmentation de la capacité sur la zone d'appui et la diminution de la capacité sur une zone opposée à la zone d'appui.

Il est également possible que lors d'un appui, l'ensemble de la lunette 81 se déplace de sorte que l'ensemble des capteurs capacitifs 92 voient leur capacité varier. L'unité de détection détecte alors la variation de chaque capteur capacitif 82 et les analyse. De cette analyse, l'unité de détection détecte les variations les plus importantes : l'augmentation de capacité la plus importante étant le point d'appui alors que la diminution de capacité la plus importante est la zone opposée au point d'appui.

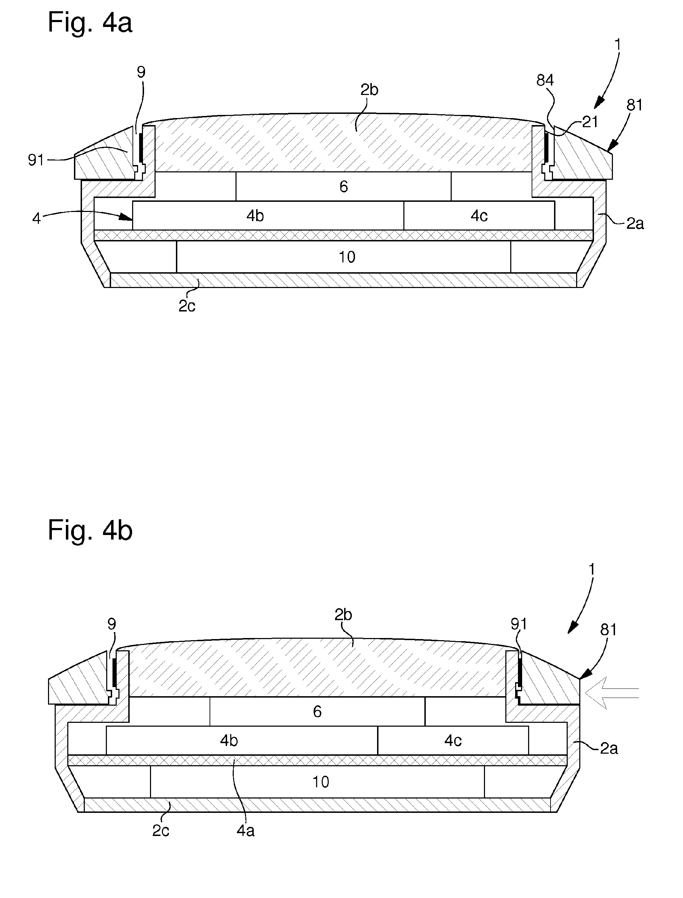

Dans un second mode d'exécution visible à la figure 4a, le degré de liberté de la lunette 81 permet la détection d'une translation de ladite lunette 81. A ce titre, les moyens d'interface 9 sont situés au niveau de l'épaulement de la carrure 2a.

Selon une première solution, les moyens d'interface 9 comprennent une pluralité de jauges de contrainte 91. Ces jauges de contrainte 91 sont électriquement reliées à une unité de détection du microcontrôleur 4b. Ces jauges de contrainte 91 sont agencées sur la paroi latérale 21 de l'épaulement 20 de sorte que la tranche intérieure 84 de la lunette 81, lorsqu'elle est montée sur le boitier 2 au niveau de sa carrure 2a, soit en regard de ces jauges de contrainte 91. Ces jauges de contrainte 91 sont réparties sur la paroi latérale 21 de l'épaulement 20. Le nombre de jauges de contraintes 91 dépend de l'application qui en sera faite.

Selon une configuration basique, il est prévu d'avoir quatre jauges de contrainte 91, une sur chaque point cardinal. On comprend alors que les quatre jauges de contrainte sont respectivement placées au niveau des marquages 12h, 3h, 6h et 9h du tour d'horloge.

Selon une configuration plus complète, il est prévu d'avoir un nombre de jauges de contrainte 91 supérieur à quatre et, de préférence, multiple de quatre, c'est-à-dire d'avoir au minimum huit jauges de contrainte 91. Ces jauges de contrainte 91 sont alors réparties angulairement sur la paroi latérale 21 de l'épaulement. Ainsi, avec huit jauges de contrainte 91, celles-ci sont disposées tous les 45°. Un nombre plus important de jauges de contrainte 91 permet une meilleure détection de la translation de la lunette mais peut entrainer une confusion : l'utilisateur qui voulait agir sur une zone précise se retrouve à agir sur une autre zone.

Chaque jauge de contrainte 91 se présente typiquement sous la forme d'un capteur piézoélectrique. Un tel capteur piézoélectrique consiste en un matériau encapsulé, ledit matériau étant apte à générer une tension électrique sous l'effet d'une pression qui lui est appliquée.

Par conséquent, lorsque l'utilisateur translate la lunette comme visible à la figure 4b, de préférence au niveau de la zone où se trouve une jauge de contrainte, une pression est exercée sur celle-ci 91. La translation de la lunette 81 par l'utilisateur consiste en une pression exercée par celui-ci sur la tranche extérieure 85 de la lunette 81, cette pression étant exercée dans une direction radiale à la lunette 81.

Cette pression entraine l'apparition d'une tension en sortie de la jauge de contrainte 91. Cette tension est détectée par l'unité de détection du microcontrôleur 4a qui va en déduire qu'un appui est effectué.

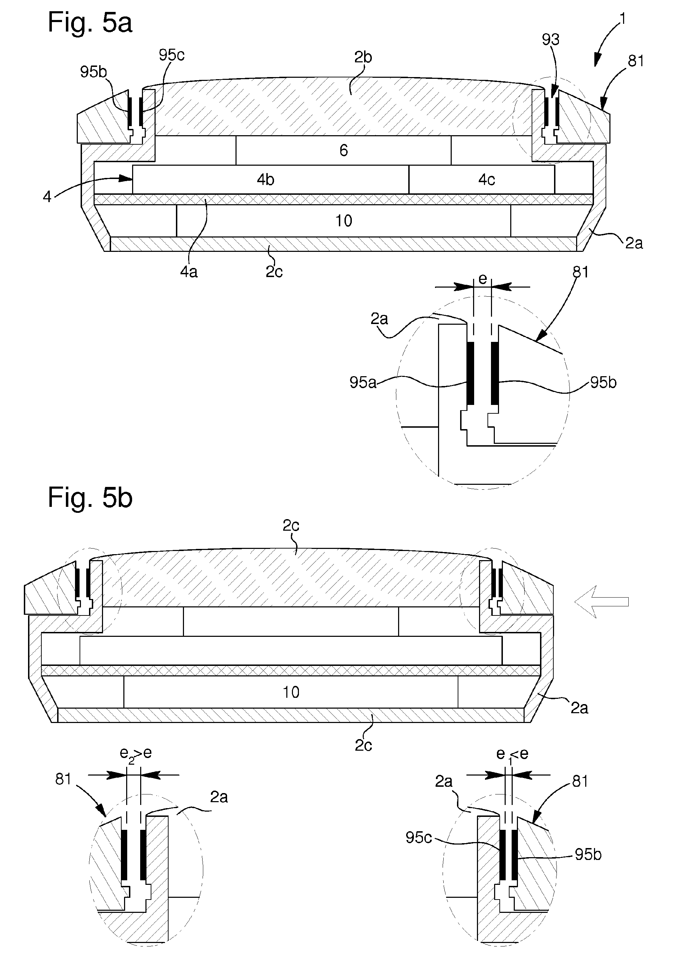

Selon une seconde solution, les moyens d'interface 9 comprennent une pluralité de capteurs capacitifs 93 comme visible à la figure 5a. Ces capteurs capacitifs 93 comprennent chacun deux armatures 95 conductrices séparées par un isolant. Ces capteurs capacitifs 93 sont électriquement reliés à une unité de détection du microcontrôleur 4b via l'une des deux armatures 95. Ces capteurs capacitifs 93 sont agencés de sorte qu'une armature 95a soit placée sur la paroi latérale 21 de l'épaulement 20 et que l'autre armature 95b soit placée sur la tranche intérieure 84 de la lunette 81. Il est donc nécessaire que la carrure et la lunette soient au moins partiellement réalisées en matériaux non conducteur comme le plastique pour que cette technologie capacitive fonctionne. L'agencement des armatures 95 permet de les avoir en regard l'une de l'autre lorsque la lunette 81 est montée sur le boitier 2.

Ces capteurs capacitifs 93 sont répartis sur la paroi latérale 21 de l'épaulement 20. Le nombre de capteurs capacitifs 93 dépend de l'application qui en sera faite.

Selon une configuration basique, il est prévu d'avoir quatre capteurs capacitifs 93, une sur chaque point cardinal. On comprend alors que les quatre capteurs capacitifs 93 sont respectivement placés au niveau des marquages 12h, 3h, 6h et 9h du tour d'horloge.

Selon une configuration plus complète, il est prévu d'avoir un nombre de capteurs capacitifs 93 supérieur à quatre et, de préférence, multiple de quatre, c'est-à-dire d'avoir au minimum huit capteurs capacitifs 93. Ces capteurs capacitifs 93 sont alors répartis angulairement sur la paroi latérale de l'épaulement 20. Ainsi, avec huit capteurs capacitifs 93, ceux-ci sont disposés tous les 45°. Un nombre plus important de capteurs capacitifs 93 permet une meilleure détection de l'appui mais peut entrainer une confusion dans l'appui : l'utilisateur qui voulait agir sur une zone précise se retrouve à agir sur une autre zone.

Le fonctionnement de ces capteurs capacitifs 93 utilise leur principe physique, comme décrit précédemment.

La grandeur utilisée ici pour la détection de l'appui est la distance e entre les armatures. En effet, on sait que si la distance e varie alors la capacité varie de sorte que si la distance e augmente, la capacité diminue et inversement.

Lorsque l'utilisateur veut interagir avec l'objet portable, il manipule la lunette 81 pour la faire translater (voir figure 5b). Pour cela, il exerce une pression sur celle-ci, de préférence au niveau d'une zone où un capteur capacitif 93 est agencé. Cette pression est exercée selon une direction radiale à la lunette 81.

Cette pression exercée vers la lunette 81 entraine un déplacement de l'armature 95b située sur la lunette 81 par rapport à l'armature 95a située en regard sur la carrure 2a. Ce déplacement consiste à un rapprochement des deux armatures 95 entraînant une diminution de la distance e et donc une modification de la capacité, celle-ci augmentant.

L'unité de détection du microcontrôleur 4b qui est chargée de la détection des valeurs de capacités des capteurs capacitifs 93 détecte cette augmentation de la capacité. L'unité de détection va en déduire qu'un appui est effectué et le microcontrôleur 4b agira en conséquence selon sa programmation.

Dans une variante, l'unité de détection prend en compte le fait que lors de la translation d'une zone de la lunette 81, la zone opposée subit un déplacement inverse. Par conséquent, si une translation due à une pression provoque, au niveau de ladite zone d'appui, un déplacement de l'armature située sur la lunette par rapport à l'armature située sur la carrure augmentant la capacité, il provoque également, au niveau de la zone opposée à la zone d'appui, un déplacement de l'armature située sur la lunette par rapport à l'armature située sur la carrure. Ce déplacement consiste en ce que les deux armatures 95 s'éloignent l'une de l'autre et par conséquent, une diminution de la capacité.

L'unité de détection détecte alors, en parallèle, l'augmentation de la capacité sur la zone d'appui et la diminution de la capacité sur une zone opposée à la zone d'appui.

Il est également possible que lors d'un appui pour translater la lunette 81, l'ensemble de la lunette 81 se déplace de sorte que l'ensemble des capteurs capacitifs 93 voient leur capacité varier. L'unité de détection détecte alors la variation de chaque capteur capacitif 93 et analyse les données. De cette analyse, l'unité de détection détecte les variations les plus importantes: l'augmentation de capacité la plus importante étant le point d'appui alors que la diminution de capacité la plus importante est la zone opposée au point d'appui.

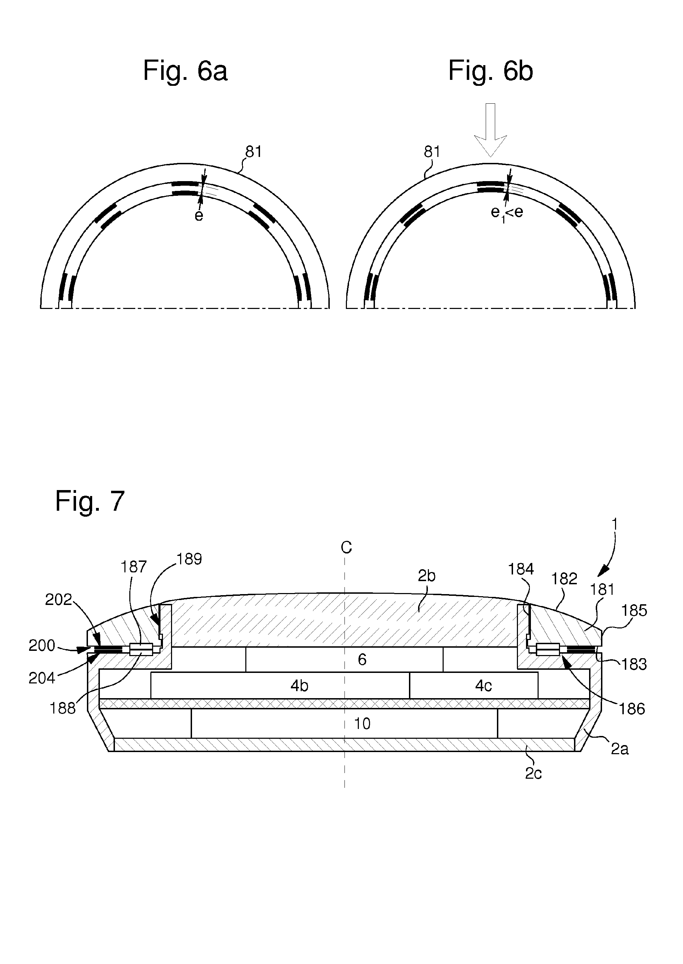

Toutefois, la translation de la lunette 81 n'entraine pas une modification de l'épaisseur entre les armatures 95 pour la totalité des capteurs capacitifs 93. Par exemple aux figures 6a et 6b, si l'utilisateur exerce une pression sur la tranche extérieure de la lunette au niveau de la zone 12H, le capteur capacitif situé sur cette zone 12H voit la distance entre ces armatures 95 diminuée alors que la zone opposée c'est-à-dire à 6H voit la distance entre ces armatures 95 augmentée. Or, pour les zones situées à 3H et 9H, la distance entre ces armatures 95 ne varie pas. Néanmoins, dans ces positions, les armatures 95 se décalent l'une par rapport à l'autre. Dans ce cas, la surface des armatures 95 en regard l'une de l'autre diminue de sorte que la capacité diminue également.

Dans un troisième mode d'exécution, le premier mode d'exécution et le second mode d'exécution sont combinés de sorte que l'utilisateur puisse agir sur la lunette 981 en pressant sur sa face supérieure 82 ou sur sa tranche extérieure 85. Les moyens d'interface 9 comprennent donc des capteurs capacitifs 93 ou jauges de contrainte 91 ou autres agencés au niveau de la base 22 de l'épaulement 20 de la carrure 2a et des capteurs capacitifs 93 ou jauges de contrainte 91 ou autres agencés au niveau de la paroi latérale 21 de l'épaulement 20 de la carrure 2a.

Dans un second mode de réalisation visible à la figure 7, le système de lunette 8 est un système de lunette tournante 180. Un tel système de lunette tournante 180 est fixé au boitier de l'objet portable au niveau de sa carrure 2a. Cette carrure comprend toujours un épaulement périphérique 20 défini par une paroi latérale 21 et une base 22, dans lequel le système 180 est placé. Le système de lunette 180 comprend une lunette 181 se présentant sous la forme d'une pièce annulaire. La lunette annulaire 181 possède une face supérieure 182, une face inférieure 183, une tranche intérieure 184 et une tranche extérieure 185, la face supérieure 182 étant la face visible par l'utilisateur.

Ce système de lunette tournante 180 comprend un ensemble d'indexation 186 comprenant un élément denté 187 tel un crantage ou une denture, et un moyen ressort 188. La lunette 181 est munie, sur sa surface inférieure, de l'élément denté 187. Le moyen ressort 188 est inséré entre la lunette tournante 181 et la carrure 2a de la pièce d'horlogerie 1 lorsque la lunette 181 est montée à force sur la carrure 2a de la pièce d'horlogerie. Bien entendu, il est possible que le crantage 187 soit agencé sur la carrure 2a alors que le moyen ressort 188 soit agencé sur la lunette.

Cette insertion à force est possible en dotant la lunette 181 et l'épaulement 20 d'un couple gorge-partie saillante 189. Par exemple, la paroi latérale 21 de l'épaulement 20 est munie d'une gorge alors que la lunette 181 est munie d'une partie saillante. Lorsque l'insertion à force pour fixer le système de lunette tournante 180 au boitier 2 est effectuée, la partie saillante de la lunette 181 s'insère dans la gorge de la paroi latérale 21 de l'épaulement 20 pour maintenir ladite lunette.

Le moyen ressort 188 se présente par exemple sous la forme d'un anneau plat comprenant, sur sa face en regard du crantage de la lunette, des lamelles. Ces lamelles sont disposées pour présenter une inclinaison entre 0 et 90° par rapport au plan de l'anneau plat. Ces lamelles présentent une certaine élasticité de sorte que les moyens ressort agissent sur la lunette tournante pour exercer une force verticale. Cette force verticale tend à pousser la lunette 181 hors de la carrure de la pièce d'horlogerie.

Ces lamelles servent également à coopérer avec le crantage 187 de la lunette. Les lamelles et le crantage sont alors configurés de sorte que la lunette soit unidirectionnelle ou bidirectionnelle. En effet, la lunette est montée tournante via un couple denture-ressort.

Pour détecter la rotation, des moyens de détection 200 de la rotation sont inclus. Ces moyens de détection 200 de la rotation comprennent en outre une série de contacts récepteurs 202 agencés au niveau de la carrure et au moins un contact curseur 204 agencé au niveau de la lunette. Il peut aussi être prévu une série de contacts récepteurs 202 agencés au niveau de la carrure et une série de contacts curseur 204 agencés au niveau de la lunette, le nombre de contacts récepteurs étant plus importants que le nombre de contacts curseurs. La technologie utilisée est capacitive ou magnétique de sorte que les contacts sont des plages métalliques ou des aimants ou éléments magnétiques.

Avantageusement selon l'invention, des moyens d'interface 9 sont agencés entre la carrure 2a et le système de lunette fixe 180 et, plus particulièrement, la lunette 181. Ces moyens d'interface 9, connectés au microcontrôleur 4b, permettent l'utilisation d'au moins un degré de liberté de mouvement de la lunette 181 par rapport à la carrure, pour opérer des manipulations de l'objet portable 1. Il peut ainsi s'agit d'un appui ou d'une translation.

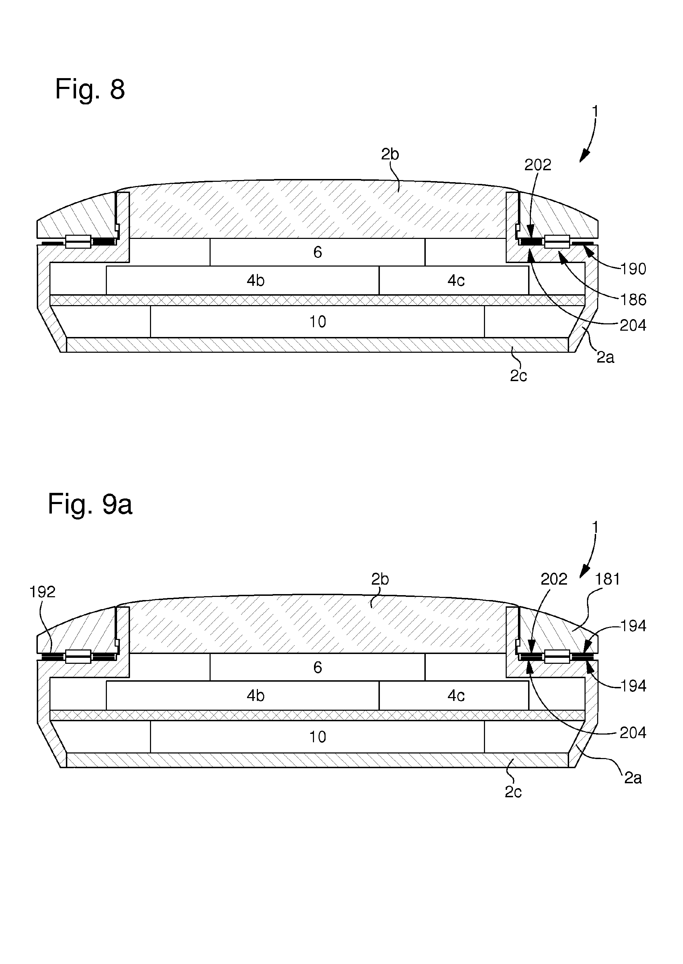

Dans une première solution visible à la figure 8, une ou des jauges de contrainte 190 sont utilisées comme décrit précédemment pour le premier mode de réalisation. Ces jauges de contrainte 190 sont agencées sur la base 22 de l'épaulement 20 de la carrure 2a de sorte que si la lunette 181 tourne, un appui est détecté peu importe la position angulaire de la lunette 181 par rapport à la carrure 2a.

Pour permettre la détection d'un appui et une détection de la rotation, la configuration ayant une série de contacts récepteurs 202 agencés au niveau de la carrure 2a et au moins un contact curseur 204 est utilisée. La série de contacts récepteurs 202 peut être agencée au niveau de la base 22 de l'épaulement 20 de la carrure 2a et ledit au moins un contact curseur 204 agencé sur la face inférieure de la lunette 181 ou alors la série de contacts récepteurs 202 peut être agencée au niveau de la paroi latérale 21 de l'épaulement 20 de la carrure et ledit au moins un contact curseur 204 agencé sur la tranche intérieure de la lunette.

Dans une seconde solution, un ou des capteurs capacitifs 192 sont utilisés comme décrit précédemment pour le premier mode de réalisation. Ces capteurs capacitifs 192 nécessite d'avoir une armature 194 au niveau de la carrure 2a et une armature 194 au niveau de la lunette 181.

Pour permettre la détection d'un appui et une détection de la rotation, la configuration ayant une série de contacts récepteurs agencés au niveau de la carrure et au moins un contact curseur est utilisée.

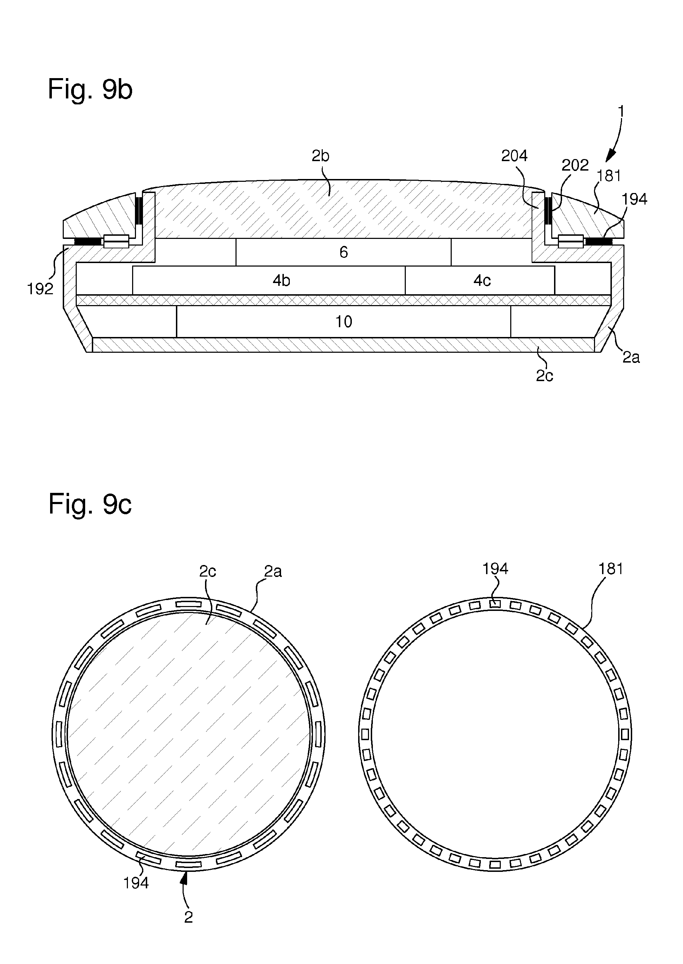

Dans une première alternative visible, la série de contacts récepteurs 204 et ledit au moins un contact curseur 202 sont dissociés des armatures 194 des capteurs capacitifs 192. La série de contacts récepteurs 204 peut être agencée au niveau de la base 22 (figure 9a) ou de la paroi latérale 21 (figure 9b) de l'épaulement 20 de la carrure 2a et ledit au moins un contact curseur 202 agencé sur la tranche intérieure 184 ou de la surface inférieure 183 de la lunette 181. Dans ce cas-là, il peut être prévu que les armatures 194 des capteurs capacitifs 182 agencées sur la carrure 2a aient une surface plus importante que les armatures des capteurs capacitifs agencées sur la lunette 181, comme visible à la figure 9c, afin d'éviter que lors de la rotation de la lunette, les armatures soient plus en regard l'une de l'autre, l'inverse pouvant être possible.

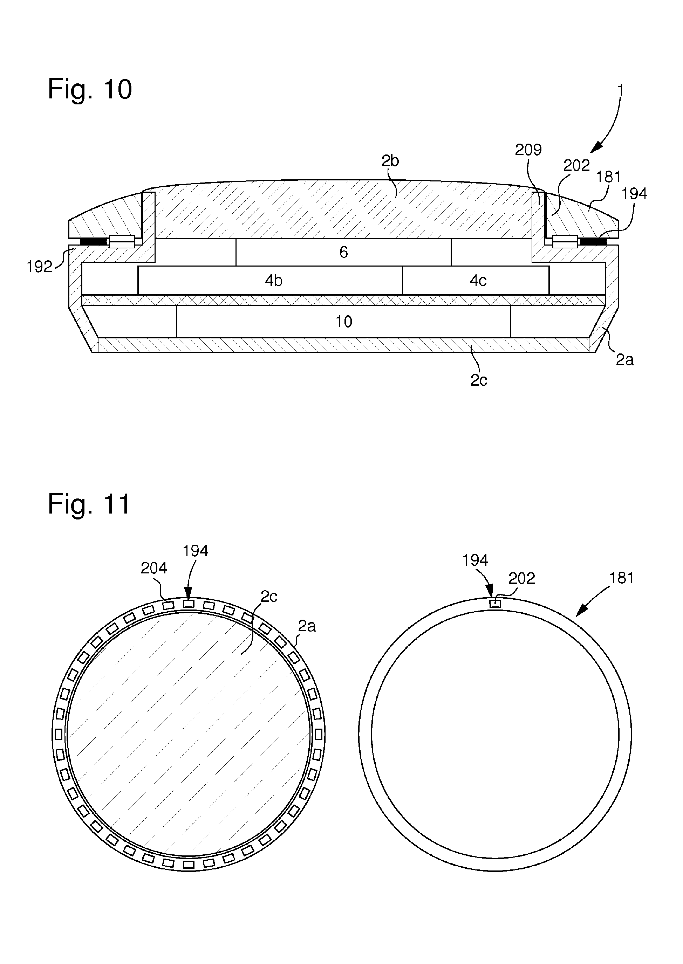

Dans une seconde alternative visible à la figure 10, la série de contacts récepteurs 204 et ledit au moins un contact curseur 202 sont associés avec les armatures 194 des capteurs capacitifs 192. En effet, dans cette seconde alternative, la série de contacts récepteurs 204 est confondue avec les armatures 194 des capteurs capacitifs 192 agencés sur la carrure alors que ledit au moins un contact curseur est confondu avec les armatures des capteurs capacitifs agencées sur la lunette. De ce fait, lorsque la lunette tourne, le ou les contacts curseurs faisant office d'armatures des capteurs capacitifs se déplacent par rapport à la série de contacts récepteurs agencés sur la carrure faisant office d'armatures de capteurs capacitifs. Afin d'améliorer le fonctionnement de cette alternative, les contacts curseurs faisant office d'armatures de capteurs capacitifs agencés sur la lunette sont de plus grandes dimensions que les contacts récepteurs. Cela permet d'être sûr d'avoir les contacts curseurs faisant office d'armatures de capteurs capacitifs toujours en regard d'un contact récepteur agencé sur la carrure. Par conséquent, l'utilisateur est sûr qu'en appuyant sur un des points cardinaux soit à 12h, 3h, 6h et 9h du tour d'horloge, son appui sera détecté.

Dans une troisième alternative visible à la figure 11, la série de contacts récepteurs 204 et ledit au moins un contact curseur 202 sont associés avec les armatures 194 des capteurs capacitifs 192. Plus particulièrement, il n'y a qu'un seul contact curseur 202. La série de contacts récepteurs 204 est confondue avec les armatures 194 des capteurs capacitifs 192 agencés sur la carrure alors que le contact curseur 202 est agencé sur la lunette 181 et fait également office d'armature. De ce fait, lorsque la lunette 181 tourne, le contact curseur 202 se déplace par rapport à la série de contacts récepteurs 204 agencés sur la carrure 2a faisant office d'armatures 194 de capteurs capacitifs 192 et permet la détection de la rotation de la lunette. La position du contact curseur 202 est avantageusement repérée sur la lunette 181 de sorte que pour agir par appui sur l'objet portable, l'utilisateur tourne la lunette pour amener le contact curseur sur le point cardinal à 12h, 3h, 6h et 9h du tour d'horloge. Une fois que la lunette se trouve dans la position désirée et dans laquelle le contact curseur 202 se trouve en regard d'un contact récepteur 204, l'utilisateur appuie sur la face supérieure 182 de la lunette. La modification de la capacité due à la pression de la lunette 181 est détectée par l'unité de détection. On a donc ici une double utilisation de la série de contacts récepteurs 204 et du contact curseur 202.

Pour l'agencement des capteurs capacitifs 192, il peut être envisagé que la base 22 de l'épaulement, la paroi latérale 21 de l'épaulement, la face inférieure 183 de la lunette et/ou la tranche intérieure 184 de la lunette soient munis d'au moins une rainure dans laquelle les armatures sont placées. Cette ou ces rainures permettent aux armatures d'être montées à fleur de surface et donc de ne pas faire saillie. On évite alors les frottements entre la lunette 181 et la carrure 2a pouvant endommager lesdites armatures. Bien entendu, la carrure 2a et la lunette 181 sont au moins partiellement réalisées en matériaux non conducteur comme le plastique pour que cette technologie capacitive fonctionne.

Pour l'agencement des jauges de contrainte 190, il peut être envisagé que la base 22 de l'épaulement 20, la paroi latérale 21 de l'épaulement, la face inférieure 183 de la lunette 181 et/ou la tranche intérieure 184 de la lunette 181 soient munies d'au moins une rainure dans laquelle les jauges de contrainte 190 sont placées. Cela permet d'éviter de faire saillie. Toutefois, pour permettre à la lunette d'agir sur lesdites zones de contrainte, ladite lunette est munie d'au moins une partie saillante. Chaque partie saillante est réalisée pour se trouver en regard d'une rainure de sorte que cette partie saillante puisse entrer en contact de la jauge de contrainte 190 suite à un appui de l'utilisateur sur la lunette 181.

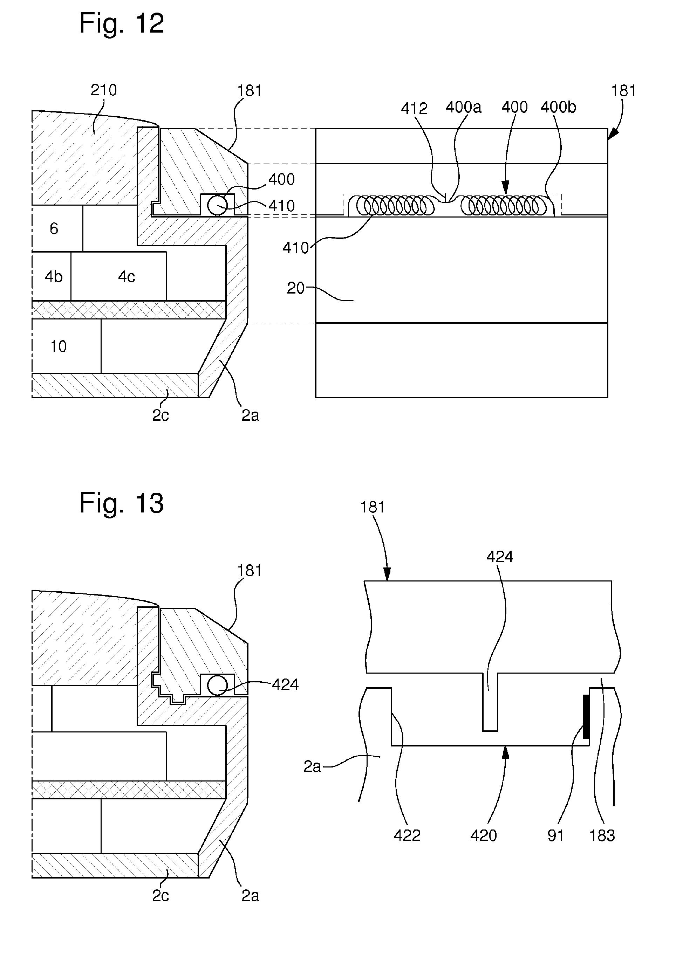

Dans une variante de réalisation, visible à la figure 12, de cette lunette tournante 181, ladite lunette 181 est montée à retour de force. Le système de lunette tournante 180 comprend en outre un système à retour de force 400 est installé.

Pour cela, un élément élastique comme au moins une cale en matériau élastomère peut être située entre ladite lunette 181 et la carrure 2a de sorte qu'une manipulation sur la lunette entraine l'apparition de frottements entre la lunette 181 et la cale en élastomère. Ces frottements associés aux propriétés élastiques de la cale entrainent un retour de la lunette 181 à sa position initiale en cas de relâchement des contraintes de l'utilisateur.

On pourra aussi prévoir que le système à retour de force 400 comprend un élément élastique comme au moins un ressort 410 de type hélicoïdal fixé, via des plots 412, par une première extrémité 410a à la lunette et par une autre extrémité 410b à la carrure. Lorsque l'utilisateur exerce une contrainte pour faire tourner la lunette 181, le ressort 410 subit une contrainte tendant à le faire s'allonger. Une fois la contrainte relâchée, le ressort 410 tend à reprendre sa forme initiale en ramenant la lunette 181 à sa position initiale. Il peut ainsi être prévu d'avoir deux ressorts 410 comme visible à la figure 12, cela permet une rotation à retour de force dans les deux sens.

Dans ce cas d'une lunette tournante à retour de force comme visible à la figure 13, des creusures 420 peuvent être agencées au niveau de la base de la lunette, ces creusures présentant un ou deux flancs droits parallèles 422 au rayon de la lunette. La lunette 181 présente alors une lame 424 agencée sur la face inférieure 183, cette lame 424 s'engageant dans la dite creusure de sorte que la lame se déplace dans la creusure lorsque la lunette tourne.

Au niveau de la creusure, une jauge de contrainte 91 est agencée sur une des parois de ladite creusure de sorte que, lorsque la lunette 181 tourne, la lame 424 se déplace et se rapproche de la paroi munie de la jauge de contrainte. Le contact de la lame avec la jauge de contrainte est alors détecté. Non seulement l'appui est détecté mais également la force de cet appui. Effectivement, il peut être envisagé qu'un appui léger signifie une premier manipulation alors qu'un appui plus important signifie une seconde manipulation. Il pourra être prévu que la creusure soit munie de deux jauges de contrainte 91 pour un retour de force bidirectionnel.

On comprendra que diverses modifications et/ou améliorations et/ou combinaisons évidentes pour l'homme du métier peuvent être apportées aux différents modes de réalisation de l'invention exposée ci-dessus sans sortir du cadre de l'invention définie par les revendications annexées.

Ainsi, il est possible que le système à retour de force 400 soit muni d'un ressort spiral pour opérer ledit retour de force.

On comprendra alors que les moyens de détection 200 de la rotation et les moyens d'interface 9 peuvent utiliser d'autres technologies que des jauges de contraintes, des capteurs capacitifs ou magnétiques. Il est en effet envisageable que les technologies inductives, galvaniques ou optiques, potentiométriques soient utilisées. Les capteurs potentiométriques servent à détecter une position ou un déplacement rectiligne ou angulaire. La rotation de l'axe du capteur est liée à la variation de la résistance comprise entre le curseur et l'une de butées par rapport à sa résistance totale. Cela permet de transmettre à distance, un signal électrique de tension proportionnel à la position de l'axe.

## Revendications

1. Pièce d'horlogerie comprenant une carrure (2a) fermée par un fond (2c) et une glace (2b) dans laquelle un système électronique (4) est agencé, ladite carrure (2a) comportant un épaulement périphérique (20) comprenant une base et une paroi latérale parallèle à l'axe central (C) de la carrure, ladite pièce d'horlogerie comprenant une lunette (81) verrouillée en rotation autour de l'axe central (C) sur ledit épaulement périphérique, **caractérisé en ce que** ladite lunette (81) présente au moins un degré de liberté permettant à des moyens d'interface (9) connectés au système électronique (4) et agencés entre la lunette (81) et la carrure d'être activés par déplacement de ladite lunette par l'utilisateur suivant une direction similaire à celle du degré de liberté permettant au système électronique (4) de commander ladite pièce d'horlogerie.

2. Pièce d'horlogerie selon la revendication 1, **caractérisée en ce que** le degré de liberté permet un mouvement de pivotement de la lunette par rapport à un de ces diamètres.

3. Pièce d'horlogerie selon l'une des revendications 1 ou 2, **caractérisée en ce que** le degré de liberté permet un mouvement de translation de la lunette dans son plan

4. Pièce d'horlogerie selon les revendications 2 ou 3, **caractérisée en ce que** les moyens d'interface sont agencés sur la base de l'épaulement.

5. Pièce d'horlogerie selon les revendications 2 ou 3, **caractérisée en ce que** les moyens d'interface sont agencés sur la paroi latérale de l'épaulement.

6. Pièce d'horlogerie selon les revendications 4 ou 5, **caractérisée en ce que** les moyens d'interface comprennent au moins un capteur capacitif (92, 93) ou au moins un capteur inductif ou au moins un capteur optique ou au moins un capteur galvanique ou au moins une jauge de contrainte (90, 91) ou au moins un capteur magnétique ou au moins un capteur potentiométrique ou une combinaison d'au moins deux de ces capteurs ou jauges.

7. Pièce d'horlogerie selon la revendication 6, **caractérisée en ce que** ledit au moins un capteur capacitif (92, 93) comprend une armature (94, 95) sur une face de l'épaulement (20) et une armature (94, 95) sur une face inférieure (83, 84) de la lunette, ladite base de l'épaulement et ladite lunette étant au moins partiellement réalisées en matériaux non conducteurs.

8. Pièce d'horlogerie comprenant une carrure (2a) fermée par un fond (2c) et une glace (2b) dans laquelle un système électronique (4) est agencé, ladite carrure (2a) comportant un épaulement périphérique (20) comprenant une base et une paroi latérale parallèle à l'axe central (C) de la carrure, ladite pièce d'horlogerie comprenant un système de lunette (180) montée mobile en rotation autour de l'axe central (C) sur ledit épaulement périphérique, ledit système de lunette tournante comprenant une lunette (181) et un ensemble d'indexation comprenant un moyen ressort (188) comme première pièce et un élément denté (187) comme seconde pièce, l'une des premières ou secondes pièces étant fixée à la lunette, l'autre étant fixée à la carrure, **caractérisée en ce que** ledit anneau présente au moins un degré de liberté permettant à des moyens d'interface (9) connectés au système électronique (4) et agencés entre ladite lunette et la carrure d'être activés déplacement de ladite lunette par l'utilisateur suivant une direction similaire à celle du degré de liberté permettant au système électronique (4) de commander ladite pièce d'horlogerie.

9. Pièce d'horlogerie selon la revendication 8, **caractérisée en ce que** le degré de liberté permet un mouvement de pivotement de la lunette (180) par rapport à un de ces diamètres.

10. Pièce d'horlogerie selon l'une des revendications 8 ou 9, **caractérisée en ce que** le degré de liberté permet un mouvement de translation de la lunette (180) dans son plan

11. Pièce d'horlogerie selon les revendications 9 ou 10, **caractérisée en ce que** les moyens d'interface (9) sont agencés sur la base de l'épaulement (20).

12. Pièce d'horlogerie selon les revendications 9 ou 10, **caractérisée en ce que** les moyens d'interface (9) sont agencés sur la paroi latérale de l'épaulement (20).

13. Pièce d'horlogerie selon les revendications 11 ou 12, **caractérisée en ce que** les moyens d'interface (9) comprennent au moins un capteur capacitif (192) ou au moins un capteur inductif ou au moins un capteur optique ou au moins un capteur galvanique ou au moins une jauge de contrainte (190) ou au moins un capteur magnétique ou au moins un capteur potentiométrique ou une combinaison d'au moins deux de ces capteurs ou jauges.

14. Pièce d'horlogerie selon la revendication 13, **caractérisée en ce que** ledit au moins un capteur capacitif (192) comprend une armature (194) sur une face de l'épaulement et une armature (194) sur une face inférieure de la lunette, ladite base de l'épaulement et ladite lunette étant au moins partiellement réalisées en matériaux non conducteurs.

15. Pièce d'horlogerie selon l'une des revendications 8 à 14, **caractérisée en ce qu'**elle comprend en outre des moyens de détection de la rotation (200) comprenant une série de contacts récepteurs (202) placés au niveau de la carrure et au moins un contact curseur (204) placé au niveau de la lunette, ladite série de contacts récepteurs et ledit au moins un contact curseur étant des plages conductrices électriquement.

16. Pièce d'horlogerie selon l'une des revendications 8 à 14, **caractérisée en ce qu'**elle comprend en outre des moyens de détection de la rotation (200) comprenant une série de contacts récepteurs (202) placés au niveau de la carrure et au moins un contact curseur (204) placé au niveau de la lunette, ladite série de contacts récepteurs et ledit au moins un contact curseur étant des éléments magnétiques.

17. Pièce d'horlogerie selon la revendication 14, **caractérisée en ce qu'**elle comprend en outre des moyens de détection de la rotation (200) comprenant une série de contacts récepteurs (202) placés au niveau de la carrure et au moins un contact curseur placé au niveau de la lunette, ladite série de contacts récepteurs et ledit au moins un contact curseur (204) sont les armatures utilisées par ledit au moins capteur capacitif.

18. Pièce d'horlogerie selon la revendication 14, **caractérisée en ce qu'**elle comprend en outre des moyens de détection de la rotation (200) comprenant une série de contacts récepteurs (202) placés au niveau de la lunette et au moins un contact curseur (204) placé au niveau de la carrure, ladite série de contacts récepteurs (202) et ledit au moins un contact curseur (204) sont les armatures (194) utilisées par ledit au moins capteur capacitif.

19. Pièce d'horlogerie selon l'une des revendications 8 à 18, **caractérisée en ce que** ledit système de lunette tournante comprenant un système à retour de force (400) un élément élastique permettant à l'anneau de reprendre sa position initiale suite à un relâchement d'une force de rotation appliquée sur ledit anneau

## Fig. 1a

## Fig. 1b

## Fig. 2a

## Fig. 2b

# Fig. 3a

# Fig. 3b

## Fig. 4a

## Fig. 4b

## Fig. 5a

95b
95c
2b
93
1
81

6

4b
4c

4

4a
2c

10

2a

e

81

2a

95a
95b

## Fig. 5b

2c

2c

2a

10

$e_2 > e$

81

2a

95a
95b

$e_c < e$

2a
81

95c
95b

Fig. 6a

Fig. 6b

81

e

81

$e_1 < e$

Fig. 7

202
200
204
188
187
189

C

2b

6

4b

10

184
182
1
181
185
183
186
4c

2a
2c

Fig. 8

Fig. 9a

Fig. 9b

Fig. 9c

## Fig. 10

## Fig. 11

## Fig. 12

## Fig. 13

EP 3 032 360 A1

RAPPORT DE RECHERCHE EUROPEENNE

Numéro de la demande
EP 14 19 7659

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | FR 2 501 389 A1 (SEIKO INSTR & ELECTRONICS [JP]) 10 septembre 1982 (1982-09-10) * page 2, ligne 12 - page 3, ligne 7 * * figures 1,2 * ----- | 1,8,15, 16 | INV. G04G21/00 G04B19/28 G04C3/00 G06F3/0338 G06F3/0362 |
| X | EP 0 754 989 A1 (GERBER MARCEL [CH]; RAY CLAUDE [CH]) 22 janvier 1997 (1997-01-22) * abrégé * * figures 5-10 * ----- | 1,8,15, 16 | |
| X | EP 0 974 879 A1 (SEIKO EPSON CORP [JP]) 26 janvier 2000 (2000-01-26) * alinéas [0014] - [0016] * * figure 4 * ----- | 1,8,15, 16 | |
| X | US 2002/101457 A1 (LANG ERIC G [US]) 1 août 2002 (2002-08-01) * alinéas [0033] - [0040] * * figures 3,4 * ----- | 1-19 | |
| A | WO 2010/105377 A1 (ROLEX SA [CH]; BEHREND RAOUL [CH]; CATTANEO JULIEN [FR]; KUFFER OLIVIE) 23 septembre 2010 (2010-09-23) * figure 3 * ----- | 1 | DOMAINES TECHNIQUES RECHERCHES (IPC) G04B G04G G04C G06F |

Le présent rapport a été établi pour toutes les revendications

| Lieu de la recherche | Date d'achèvement de la recherche | Examinateur |
|---|---|---|
| La Haye | 13 juillet 2015 | Pirozzi, Giuseppe |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
............
& : membre de la même famille, document correspondant

EPO FORM 1503 03.82 (P04C02)

22

**ANNEXE AU RAPPORT DE RECHERCHE EUROPEENNE
RELATIF A LA DEMANDE DE BREVET EUROPEEN NO.**

EP 14 19 7659

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

13-07-2015

| Document brevet cité au rapport de recherche | | Date de publication | Membre(s) de la famille de brevet(s) | | Date de publication |
|---|---|---|---|---|---|
| FR 2501389 | A1 | 10-09-1982 | FR | 2501389 A1 | 10-09-1982 |
| | | | GB | 2097562 A | 03-11-1982 |
| | | | HK | 65086 A | 05-09-1986 |
| | | | JP | S57147081 A | 10-09-1982 |
| | | | US | 4451159 A | 29-05-1984 |
| EP 0754989 | A1 | 22-01-1997 | CH | 689531G A3 | 15-06-1999 |
| | | | EP | 0754989 A1 | 22-01-1997 |
| EP 0974879 | A1 | 26-01-2000 | AT | 368245 T | 15-08-2007 |
| | | | DE | 69838132 T2 | 10-04-2008 |
| | | | EP | 0974879 A1 | 26-01-2000 |
| | | | JP | H11211862 A | 06-08-1999 |
| | | | US | 6575618 B1 | 10-06-2003 |
| | | | WO | 9926117 A1 | 27-05-1999 |
| US 2002101457 | A1 | 01-08-2002 | US | 2002101457 A1 | 01-08-2002 |
| | | | US | 2006139320 A1 | 29-06-2006 |
| WO 2010105377 | A1 | 23-09-2010 | CN | 102356362 A | 15-02-2012 |
| | | | EP | 2409200 A1 | 25-01-2012 |
| | | | EP | 2738625 A1 | 04-06-2014 |
| | | | JP | 5570584 B2 | 13-08-2014 |
| | | | JP | 2012520988 A | 10-09-2012 |
| | | | US | 2012002513 A1 | 05-01-2012 |
| | | | WO | 2010105377 A1 | 23-09-2010 |

EPO FORM P0460

Pour tout renseignement concernant cette annexe : voir Journal Officiel de l'Office européen des brevets, No.12/82